# EUROPÄISCHE PATENTSCHRIFT

(11) **EP 0 963 512 B1**
(45) Veröffentlichungstag und Bekanntmachung des Hinweises auf die Patenterteilung: **23.04.2003**
(21) Anmeldenummer: 98940161.7
(22) Anmeldetag: 07.07.1998
(51) Int. Cl.: F02B 27/02, F02M 35/116

(54) **ROHRSYSTEM, INSBESONDERE SAUGROHR EINER BRENNKRAFTMASCHINE**
DUCT SYSTEM, PARTICULARLY AN INTERNAL COMBUSTION ENGINE INTAKE MANIFOLD
SYSTEME DE TUYAUX, EN PARTICULIER COLLECTEUR D'ADMISSION DE MOTEUR A COMBUSTION INTERNE

(30) Priorität: 11.07.1997 DE 19729729
(43) Veröffentlichungstag der Anmeldung: 15.12.1999
(73) Patentinhaber: FILTERWERK MANN & HUMMEL GmbH, 71631 Ludwigsburg (DE)
(72) Erfinder: DOBUSCH, Heinz, D-71672 Marbach (DE); KOCH, Ingo, D-71634 Ludwigsburg (DE); KOSICKI, Jürgen, D-74391 Erligheim (DE)
(74) Vertreter: Voth, Gerhard, Dipl.-Ing.
(86) Internationale Anmeldenummer: EP9804197
(87) Internationale Veröffentlichungsnummer: WO99002828

(56) Entgegenhaltungen:
- EP-A- 0 201 180
- EP-A- 0 352 820
- DE-A- 4 042 415
- US-A- 5 636 605

## Beschreibung

Die Erfindung betrifft ein Rohrsystem insbesondere ein Saugrohr einer Brennkraftmaschine nach der Gattung des Patentanspruches 1. Derartige Saugrohre werden verwendet, um die durch den Luftfilter gereinigte Ansaugluft zu den Einlaßventilen des Zylinderkopfes einer Brennkraftmaschine zu leiten.

Derartige Saugrohre sind bekannt. Zum Beispiel offenbart die EP 0483672 A1 ein Saugrohr welches für Brennkraftmaschinen mit V-förmiger Zylinderanordnung zum Einsatz kommt. Die in dieser Schrift beschriebene Brennkraftmaschine wird mit der Kurbelwelle quer zur Fahrtrichtung des Fahrzeugs eingebaut. Würde das Saugrohr vollständig zwischen den Zylinderköpfen des Motorblockes angeordnet, würde sich eine Bauhöhe des Motors ergeben, die in den aerodynamisch abgeflachten Motorräumen moderner PKW's keinen Platz finden würde. Durch die Neigung der Motorhaube ist der Platz vor der in Fahrtrichtung gesehen vorderen Zylinderreihe noch stärker beschränkt. Daher wird vorgeschlagen die Saugkanäle beider Zylinderreihen in Fahrtrichtung nach hinten zu führen und die zugehörigen Sammelräume über der in Fahrtrichtung hinteren Zylinderreihe anzuordnen, wo hierfür zwischen Zylinderreihe und Haube noch ein Volumen zur Verfügung steht.

Durch diese Maßnahme ergibt sich jedoch eine außerordentlich komplexe Saugrohrgeometrie. Bei den klassischen gebauten Saugrohren entsteht dadurch eine erhöhte Komponentenvielfalt. Als Konsequenz daraus ergibt sich ein erhöhter Fertigungsaufwand der Bauteile und ein hoher Aufwand in der Endmontage. Zusätzlich erhöhen die vielen Flanschverbindungen des Saugrohres sein Gewicht.

Ein Gegenstand nach Anspruch 1, 1. Teil ist aus der US-A- 5 636 605 bekannt.

Die Aufgabe der Erfindung besteht daher darin, ein Saugrohr, insbesondere zur Verwendung bei v-förmigen, quer eingebauten Brennkraftmaschinen, zu schaffen, welches den zur Verfügung stehenden Bauraum optimal nutzt, ein begrenztes Bauteilgewicht hat und wirtschaftlich in der Fertigung sowie oder Montage ist. Diese Aufgabe wird durch die Merkmale des Patentanspruches 1 gelöst.

### Vorteile der Erfindung

Das erfindungsgemäße Rohrsystem zeichnet sich durch eine Anordnung der zu den Einlaßventilen führenden Saugkanäle aus, die es erlaubt zumindest teilweise gemeinsame Wandabschnitte zwischen den Saugkanälen vorzusehen. Dies wird dadurch erreicht, daß die Saugkanäle paarweise übereinander angeordnet sind. In den Bereichen, in denen die Saugkanalvolumina aneinander stoßen kann zur Trennung ein gemeinsamer Wandabschnitt vorgesehen werden, wobei beide Oberflächen dieses Wandabschnittes je zu einer der übereinander liegenden Saugrohrwände gehören. Auf diese Weise läßt sich am Rohrsystem Material einsparen. Durch die gemeinsamen Wandabschnitte wird das Rohrsystem im übrigen kompakter, was zu einer besseren Volumenausnutzung führt sowie eine Versteifung des Bauteils bewirkt.

Gemäß einer besonderen Ausführungsform der Erfindung wird das Rohrsystem derart gestaltet, daß sich das Volumen des Sammelraums über oder neben der in Fahrtrichtung gesehen hinteren Zylinderreihe der quer eingebauten Brennkraftmaschine befindet. Hierdurch wird der Einbauraum, der für das Saugrohr zur Verfügung steht, auch bei stark abgeflachten Motorhauben optimal genutzt. Es ist sinnvoll, zwei Sammelräume vorzusehen wobei die Saugkanäle jeweils einer Zylinderreihe der v-förmigen Brennkraftmaschine von dem gleichen Sammelraum abgehen.

Eine weitere Ausgestaltung der Erfindung sieht vor, die von den einzelnen Sammlern abgehenden Saugkanäle zu Gruppen zusammenzufassen, wobei jedes einzelne Saugrohr einer oberen Gruppe zumindest teilweise parallel zu einem entsprechendem Saugrohr einer unteren Gruppe verläuft. Hierdurch ergibt sich auch bei dieser Variante die Möglichkeit, gemeinsame Wandabschnitte zwischen jeweils den oberen und unteren Saugrohren vorzusehen. Weiterhin ist es möglich, den Verlauf der Saugkanäle einer Gruppe derart zu gestalten, daß auch zwischen diesen gemeinsame Wandabschnitte entstehen. Dies führt zu einer weiteren Materialersparnis und einer noch höheren Kompaktheit des Saugrohres.

Sofern mehrere Sammelräume in das Saugrohr integriert sind, ist es vorteilhaft diese durch einen oder mehrere Resonanzkanäle zur verbinden. In diesen können Resonanzklappen angeordnet sein. Hierdurch läßt sich die Akustik des Saugrohres sowie die Motorleistung verbessern. Die Resonanzklappen können im Vollastbetrieb der Brennkraftmaschine geöffnet sein, wodurch sich kurze Saugrohrlängen ergeben. Im Teillastbereich können die Klappen verschlossen werden, wodurch die Volumina der Sammelräume als Verlängerung des Saugkanals wirken.

Eine besondere Ausführungsform der Erfindung sieht Modularflansche am Saugrohr vor. An diese Flanschverbindung können Bauteile wie Resonanzkanal oder eine Ansaugstrecke angegliedert werden. Hierdurch wird es möglich, das Saugrohr als Basisteil auszuführen, die in die Motorräume unterschiedlicher Fahrzeuge eingepaßt werden kann. Auch ist es denkbar unterschiedliche Varianten für Resonanzkanäle oder sogar durch Anbringen eines Deckels überhaupt kein Resonanzkanal vorzusehen. Dies hat den zusätzlichen Vorteil, daß durch eine Modifikation der Anschlußteile das akustische Verhalten auch nach Abschluß der Entwicklungsarbeiten noch kostengünstig modifiziert werden kann.

Es ist vorteilhaft die Saugkanäle zu den einzelnen Zylindern gleich lang auszuführen. Hierdurch läßt sich eine gleichmäßigere Anströmung der Zylinder erreichen. Außerdem ist das Strömungsverhalten der Ansaugluft im Saugrohr besser vorhersehbar.

Eine zweckmäßige Ausbildung sieht als Konstruktionswerkstoff für das Saugrohr Kunststoff vor. Das Saugrohr kann somit vorteilhafterweise aus mehreren verschweißten Kunststoffschalen hergestellt sein. Zum Verschweißen eignet sich insbesondere das Vibrationsschweißverfahren, genauso denkbar sind jedoch auch andere Verfahren wie das Ultraschallschweißen.

Die im Saugrohr vorgesehenen gemeinsamen Wandabschnitte ermöglichen einen Aufbau des Saugrohrs aus drei Schalen, obwohl dieses aus zwei Saugkanalgruppen besteht. Dies wird dadurch möglich, daß die gemeinsamen Wandabschnitte in eine Mittelschale integriert sind. In dem Bereich in dem die Saugkanäle paarweise parallel übereinander angeordnet sind bildet das Mittelteil also gleichzeitig ein Unterteil für die oberen Saugkanäle, die mit einer Oberschale verbunden wird, und das Oberteil der unteren Saugkanäle, das mit einer Unterschale verbunden wird. Das Mittelteil stellt somit eine Integration der Funktionen des Ober- und des Unterteils dar.

Durch die Einsparung einer Schale verringern sich die Bauteilkosten erheblich. Dies wird erreicht durch Einsparung eines Spritzgießwerkzeuges sowie durch einen verringerten Fügeaufwand im Vergleich zu einer vierschaligen Bauform. Das gefügte Teil ist als kompakte Einheit im Motorraum montierbar, wodurch im Vergleich zu gebauten Saugrohren auch der Montageaufwand wesentlich verringert wird. Die kompakte Form des Saugrohres sowie die Gestaltung in Kunststoff führt weiterhin zu einer Gewichtseinsparung bei der Baugruppe.

Auch, wenn konstruktiv Modularflansche vorgesehen werden, hält sich der Montageaufwand für das Saugrohr in Grenzen und ist wesentlich geringer als bei der klassischen Form gebauter Saugrohre. Durch die modulare Form lassen sich höhere Stückzahlen für das Saugrohr erzielen, was zu einer erhöhten Wirtschaftlichkeit des Saugrohres führt.

### Zeichnung

Weitere Einzelheiten der Erfindung werden in den Zeichnungen anhand von schematischen Ausführungsbeispielen beschrieben. Hierbei zeigen:
- Figur 1: Die Aufsicht auf ein Dreischalensaugrohr aus Kunststoff für eine v-förmige Brennkraftmaschine mit zwei getrennten Sammelräumen,
- Figur 2: den Schnitt A-A gemäß Figur 1 und
- Figur 3: den Schnitt B-B gemäß Figur 1 durch zwei parallel verlaufende Saugkanäle mit gemeinsamen Wandabschnitt.

### Beschreibung der Ausführungsbeispiele

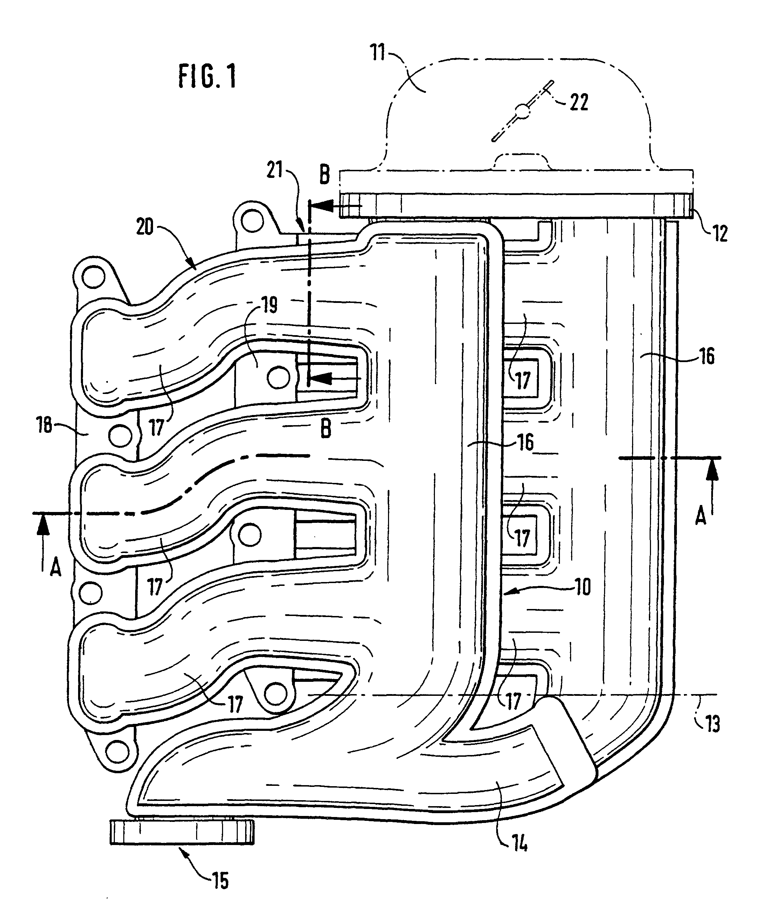

In Figur 1 ist die Ansicht eines Saugrohres von oben dargestellt. Dieses besteht aus einem Saugrohrgehäuse 10, an das ein Resonanzkanal 11 über einen Modularflansch 12 angeflanscht ist. Ein zweiter Modularflansch könnte entlang der Trennebene 13 angeordnet werden. Auf diese Weise könnte von dem Saugrohrgehäuse 10 eine Ansaugstrecke 14 abgetrennt werden. Durch den modularen Aufbau kann das Saugrohr besser an die Einbauverhältnisse unterschiedlicher Motorräume angepaßt werden. Es ist denkbar, Ansaugstrecken 14 und Resonanzkanäle 11 unterschiedlicher Geometrie für das Saugrohrgehäuse 10 vorzusehen. Auch ist ein Austausch der Seiten am Saugrohrgehäuse für Resonanzkanal und Ansaugstrecke denkbar.

Die gefilterte Ansaugluft tritt durch einen Einlaß 15 in das Saugrohr ein und wird durch die Ansaugstrecke 14 einem oberen sowie einem unterem Sammelraum 16 zugeführt. Vom oberen Sammelraum führen Saugkanäle 17 zu einem vorderen Zylinderkopfflansch 18. In gleicher Weise ist der untere Sammelraum durch Saugkanäle 17 mit einem hinteren Zylinderkopfflansch 19 verbunden. Dadurch entsteht jeweils eine obere Saugkanalgruppe 20 und eine untere Saugkanalgruppen 21, die zumindest teilweise parallel verlaufen. Die beiden Sammelräume 16 sind durch den Resonanzkanal 11 verbunden. Diese Verbindung ist durch eine Resonanzklappe 22 verschließbar.

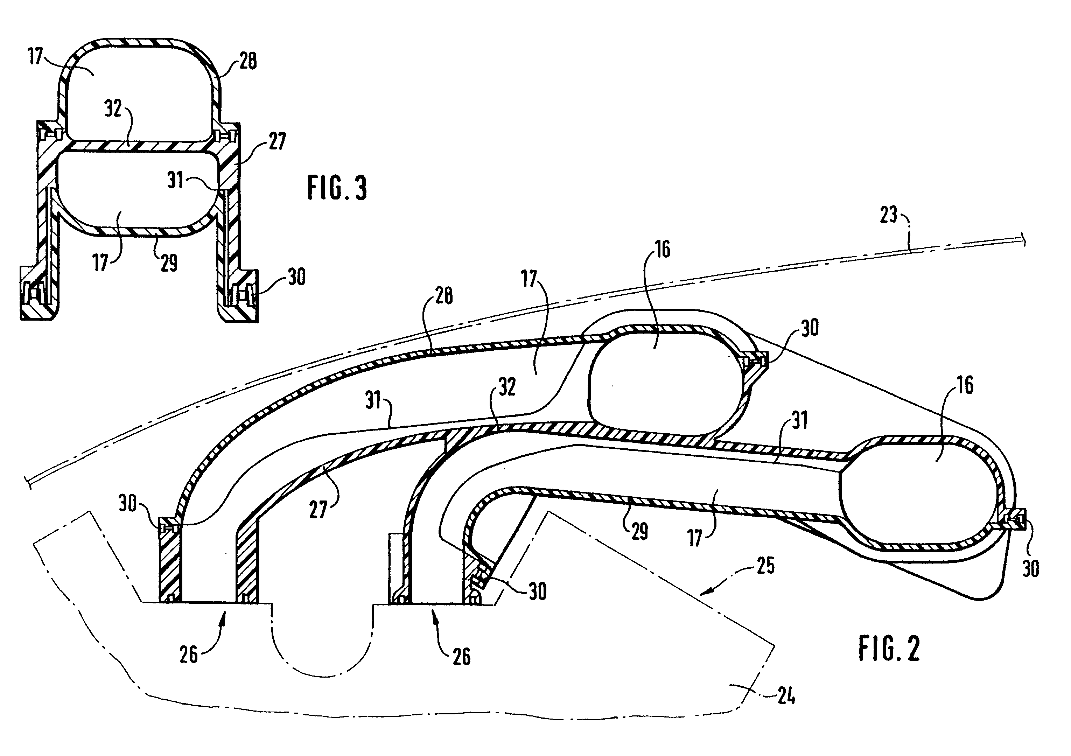

In Figur 2 ist der Schnitt durch eines der paarweise übereinander angeordneten Saugkanäle 17 dargestellt. Der für das Saugrohr zur Verfügung stehende Einbauraum ist durch eine Innenkontur der Motorhaube 23 und einer Außenkontur des Motorblockes 24 angedeutet. Durch das ansteigende Profil der Motorhaube entsteht ein Hohlraum über einer hinteren Zylinderreihe 25, der durch die Sammelräume 16 des Saugrohres genutzt werden kann. Der obere der Sammelräume ist über der Zylinderreihe 25 angeordnet, der untere Sammelraum eher hinter der Zylinderreihe. Die Saugkanäle 17 zwischen den Sammelräumen 16 und zylinderseitigen Auslässen 26 weisen alle dieselbe Länge auf

Das Saugrohr besteht aus einem Mittelteil 27 sowie einer Oberschale 28 und einer Unterschale 29, die über Schweißansätze 30 mit der Mittelschale verbunden sind. Trennfugen 31 zwischen Oberschale, Mittelteil und Unterschale verlaufen durch die Saugkanäle 17 sowie die Sammelräume 16. Dadurch sind zur Herstellung des Saugrohres keine Kerne erforderlich. In das Mittelteil 27 ist ein gemeinsamer Wandabschnitt 32 integriert. Dieser entsteht dadurch, daß die obere Saugkanalgruppe und die untere Saugkanalgruppe parallel zu einander verlaufen und aneinanderstoßen.

Der gemeinsame Wandabschnitt 32 zwischen den Querschnitten der Saugrohre 17 wird auch in dem Schnitt aus Figur 3 deutlich. Der Aufbau des Saugrohres im Bereich der Saugkanäle, bestehend aus Oberschale 28, Mittelteil 27 und Unterschale 30, wird ebenfalls deutlich. Aufgrund der starken Krümmung der Trennfuge 31 im unteren Saugkanal (siehe auch Figur 2) ist es nötig, die Trennfuge in diesem Bereich von dem Schweißabsatz räumlich zu trennen. Dadurch kann die Krümmung des Schweißabsätze 30 geringer ausfallen. Dies ist notwendig um die Anwendung des Vibrationsschweißverfahrens zur Verbindung der Saugrohrschalen zu ermöglichen.

### Bezugszeichenliste

- 10: Saugrohrgehäuse
- 11: Resonanzkanal
- 12: Modularflansch
- 13: Trennebene
- 14: Ansaugstrecke
- 15: Einlaß
- 16: Sammelraum
- 17: Saugkanäle
- 18: vorderer Zylinderkopfflansch
- 19: hinterer Zylinderkopfflansch
- 20: obere Saugkanalgruppe
- 21: untere Saugkanalgruppe
- 22: Resonanzklappe
- 23: Motorhaube
- 24: Motorblock
- 25: Zylinderreihe
- 26: Auslaß
- 27: Mittelteil
- 28: Oberschale
- 29: Unterschale
- 30: Schweißabsatz
- 31: Trennfuge
- 32: gemeinsamer Wandabschnitt

## Patentansprüche

1. Rohrsystem, insbesondere Saugrohr einer Brennkraftmaschine, umfassend einen Einlaß(15), mindestens einen Sammelraum (16) und mehrere Saugkanäle (17) mit zylinderseitigen Auslässen (26), wobei die Saugkanäle paarweise übereinander angeordnet sind und die Saugkanäle (17) in einem parallel zueinander verlaufenden Bereich einen gemeinsamen Wandabschnitt (32) aufweisen, wobei dieses Rohrsystem aus drei insbesondere vibrationsverschweißten Schalen, beinhaltend ein Mittelteil (27), besteht, wobei das Mittelteil mindestens den gemeinsamen Wandabschnitt (32) aufweist, **dadurch gekennzeichnet, daß** die drei Schalen eine Oberschale (28), das Mittelteil (27) und eine Unterschale umfassen.

2. Rohrsystem nach Anspruch 1, **dadurch gekennzeichnet, daß** dieses für eine Brennkraftmaschine mit V-förmiger Zylinderanordnung vorgesehen ist, wobei die Sammelräume oder der Sammelraum (16) neben und/oder über der einen Zylinderreihe angeordnet sind.

3. Rohrsystem nach einem der vorherigen Ansprüche, **dadurch gekennzeichnet, daß** die Saugkanäle (17) zu übereinanderliegenden und zumindest teilweise parallel verlaufenden Gruppen zusammengefaßt sind, wobei die Saugkanäle (17) der einzelnen Gruppen untereinander gemeinsame Wandabschnitte aufweisen.

4. Rohrsystem nach einem der vorherigen Ansprüche, **dadurch gekennzeichnet, daß** zwei Sammelräume (16) vorgesehen sind, die durch mindestens einen Resonanzkanal (11) verbunden sind, in dem eine Resonanzklappe (22) angeordnet sein kann.

5. Rohrsystem nach einem der vorherigen Ansprüche, **dadurch gekennzeichnet, daß** die Sammelräume Modularflansche (12) aufweisen, die einer Ansaugstrecke (14) und/oder den Resonanzkanälen (11) verbunden sind.

6. Rohrsystem nach einem der vorherigen Ansprüche, **dadurch gekennzeichnet, daß** die Saugkanäle zumindest im wesentlichen gleich lang sind.

7. Rohrsystem nach einem der vorherigen Ansprüche, **dadurch gekennzeichnet, daß** dieses aus Kunststoff gefertigt ist.

## Claims

1. Tubular system, especially intake tube for an internal combustion engine comprising an inlet (15), at least a collection chamber (16) and several intake channels (17) with cylindersided outlets (26); whereby the intake channels are arranged in pairs one over the other and whereby the intake channels (17) present a common wallsection (32) extending in a parallel area; whereby the said tubular system is made of three vibration sealed shells comprising a median part (27); whereby the said median part presents at least the common wallsection (32), **characterised in that** the three shells comprise an upper shell (28), a median part (27) and an under shell.

2. Tubular system according to claim 1, **characterised in that** the said tube system is provided for an internal combustion engine with a cylinder arrangement in V-shape ; whereby the collection chambers or the collection chamber (16) are arranged near and/or over one of the cylinder row .

3. Tubular system according to one of the preceding claims, **characterised in that** the intake channels (17) are assembled to superposed and at least partially parallel groups , the intake channels (17) of the individual groups presenting common wallsections.

4. Tubular system according to one of the preceding claims, **characterised in that** two collection chambers (16) are provided which are communicating at least trough a resonance channel (11) in which a resonance valve (22) is arranged.

5. Tubular system according to one of the preceding claims, **characterised in that** the collection chambers present modular flanges (12) which are connected to an intake way (14) and/or the resonance channel (11).

6. Tubular system according to one of the preceding claims, **characterised in that** the intake channels are essentially of same length.

7. Tubular system according to one of the preceding claims, **characterised in that** it is made of plastic.

## Revendications

1. Système tubulaire, notamment un tube d'aspiration d'une machine à combustion interne comprenant une entrée (15), au moins une chambre de collecte (16) et plusieurs canaux d'aspiration (17) avec des sorties (26) du côté du cylindre ; les canaux d'aspiration étant disposés par paire les uns au dessus des autres et les canaux d'aspiration présentant un tronçon de paroi (32) commun dans une zone s'étendant de façon parallèle ; ledit système tubulaire étant composé de trois enveloppes comprenant une partie médiane (27) où la partie médiane présente au moins le tronçon de paroi (32) commun, notamment des enveloppes soudées par vibrations, **caractérisé en ce que** les trois enveloppes comprennent une enveloppe supérieure (28), une partie médiane (27) et une enveloppe inférieure ; la partie médiane présentant au moins le tronçon de paroi (32) commun.

2. Système tubulaire selon la revendication 1, **caractérisé en ce qu'**il est prévu une machine à combustion interne avec une disposition de cylindre en V ; les chambres de collecte ou la chambre de collecte (16) étant disposée près et/ou au-dessus d'une rangée de cylindres .

3. Système tubulaire selon une des revendications précédentes, **caractérisé en ce que** les canaux d'aspiration (17) sont rassemblés en des groupes superposés et au moins en partie disposés de manière parallèle ; les canaux d'aspiration (17) des différents groupes présentant entre eux des tronçons de paroi communs.

4. Système tubulaire selon une des revendications précédentes, **caractérisé en ce qu'**on a prévu deux chambres de collecte (16) qui sont reliées par au moins un canal de résonance (11) dans lequel est disposé un clapet de résonance (22).

5. Système tubulaire selon une des revendications précédentes, **caractérisé en ce que** les chambres de collecte présentent des flasques modulables (12) qui sont reliés à un trajet d'aspiration (14) et ou des canaux de résonance (11).

6. Système tubulaire selon une des revendications précédentes, **caractérisé en ce que** les canaux d'aspiration sont essentiellement de la même longueur.

7. Système tubulaire selon une des revendications précédentes, **caractérisé en ce que** celui-ci est réalisé dans une matière plastique.
